## Europäisches Patentamt
## European Patent Office
## Office européen des brevets

(19)

(11) Numéro de publication: **0 095 976**
**B1**

(12)

# FASCICULE DE BREVET EUROPEEN

(45) Date de publication du fascicule du brevet:
**14.08.85**

(51) Int. Cl.⁴: **B 23 K 9/02**

(21) Numéro de dépôt: **83401055.5**

(22) Date de dépôt: **26.05.83**

(54) **Procédé de soudage de deux pièces.**

(30) Priorité: **26.05.82 FR 8209185**

(43) Date de publication de la demande:
**07.12.83 Bulletin 83/49**

(45) Mention de la délivrance du brevet:
**14.08.85 Bulletin 85/33**

(84) Etats contractants désignés:
**BE CH DE GB IT LI NL SE**

(56) Documents cités:
**GB - A - 1 604 077**
**US - A - 4 213 024**

(73) Titulaire: **FRAMATOME ET CIE., Tour Fiat 1, Place de la Coupole, F-92400 Courbevoie (FR)**

(72) Inventeur: **Peigney, Alain, 68 rue Morinet, F-71100 Chalon-sur-Saone (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

La présente invention concerne un procédé permettant de réaliser le soudage de deux pièces bout à bout, ces pièces étant de préférence de forme cylindrique et de même diamètre.

Le soudage bout à bout de deux pièces cylindriques, par exemple de deux tubes, est une opération délicate. Généralement le soudage de telles pièces est obtenu par un procédé manuel, avec métal d'apport. Cependant, un procédé de soudage manuel ne permet pas de garantir la constance de la qualité des soudures. Lorsque, par exemple, les tubes à souder bout à bout sont destinés à constituer un faisceau tubulaire de générateur de vapeur pour centrale nucléaire, il est demandé, pour ces soudures, une très grande fiabilité. Dans ce cas, les soudures doivent présenter une régularité et une uniformité très grandes qui ne peuvent être obtenues par ce procédé.

La présente invention vise donc à pallier ces inconvénients.

La présente invention concerne par conséquent un procédé de soudage de deux pièces cylindriques disposées bout à bout.

Selon une caractéristique essentielle de cette invention, ce procédé comprend les opérations successives suivantes:

— une disposition des deux pièces bout à bout, coaxialement, leurs faces planes radiales étant en regard, et une première bague étant insérée entre les faces planes en regard,

— soudage par l'extérieur, au niveau de la première bague de façon à créer un premier cordon de soudure entre les deux pièces à souder, le métal d'apport étant constitué par cette première bague elle-même,

— un déplacement longitudinal d'une deuxième bague disposée autour de l'une des pièces à souder, jusqu'à ce que cette deuxième bague vienne entourer par l'extérieur le premier cordon de soudure déjà effectué,

— soudage par l'extérieur, au niveau de cette deuxième bague de façon à créer un deuxième cordon de soudure sur le premier cordon, cette deuxième bague faisant office de métal d'apport.

Selon une autre caractéristique de l'invention, la deuxième bague est fendue, et a des dimensions telles qu'elle peut être enfilée sur l'une des pièces à souder par ouverture de la fente de cette bague par déformation élastique, et que, lorsque cette bague fendue est ensuite disposée autour du premier cordon de soudure, elle se referme élastiquement de façon que la fente redevienne nulle ou minimum, sans jeu radial excessif entre cette bague fendue et le premier cordon de soudure.

D'autres caractéristiques et avantages apparaîtront lors de la description détaillée de l'exemple de réalisation qui va suivre, illustré par les dessins annexés.

La fig. 1 représente, en coupe longitudinale AA, les pièces à souder disposées avant la première opération de soudage.

La fig. 2 représente une coupe transversale BB de la fig. 1.

Les fig 3, 4, 5 et 6 représentent une même coupe partielle longitudinale des pièces à souder au cours des différentes étapes successives du procédé de soudage conforme à l'invention.

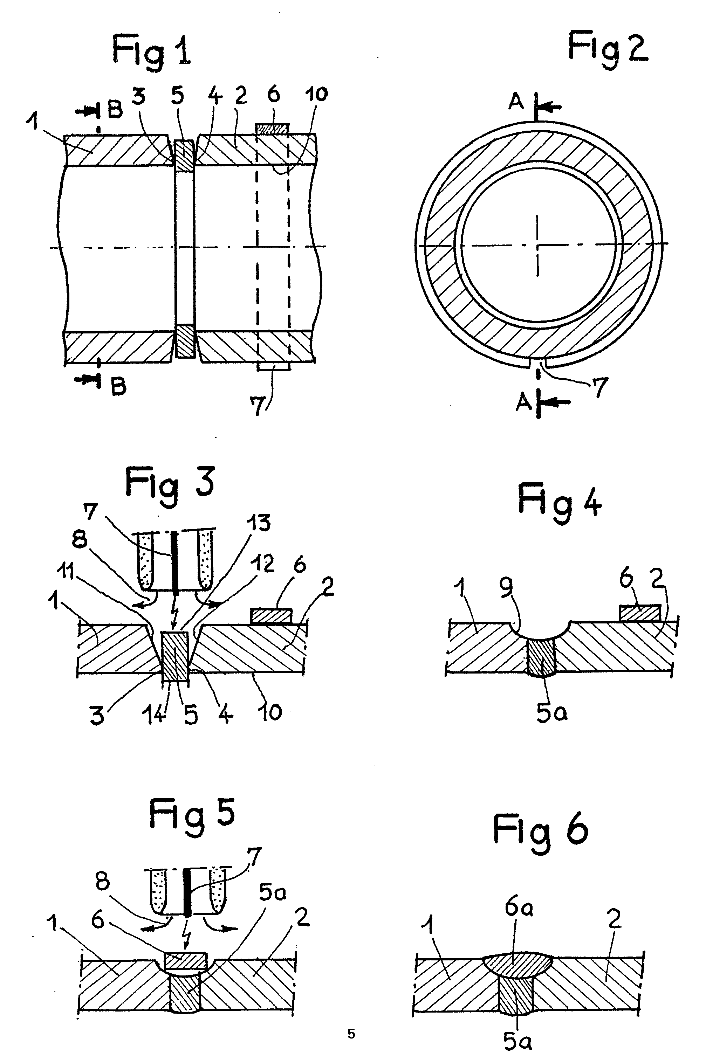

En se reportant aux fig. 1 et 2, on distingue les deux pièces à souder 1, 2, qui ont, dans cet exemple, des formes cylindriques tubulaires, et qui présentent des faces planes radiales 3, 4, disposées en regard. Entre ces faces radiales 3 et 4, est insérée de façon concentrique aux deux pièces une première bague 5. Sur la pièce à souder 2 est montée une deuxième bague 6 élastique comprenant une fente 7. Lorsque cette bague 6 n'est pas montée sur le tube 2, sa fente 7 est refermée, et le diamètre intérieur de cette bague 6 est légèrement inférieur au diamètre extérieur du tube 2. En conséquence, lorsque la bague fendue 6 est montée sur le tube 2, sa fente 7 prend une valeur appréciable, visible en fig. 2.

Le procédé de soudage consiste donc, en premier lieu, à disposer l'ensemble des pièces à souder 1, 2, ainsi que des bagues 5 et 6, comme indiqué précédemment.

Une seconde phase du procédé consiste à souder par l'extérieur (comme représenté en fig. 3), au niveau de la première bague 5, de façon à créer un premier cordon de soudure 5a entre les deux pièces à souder (comme représenté en fig. 4). Cette bague 5 fait office de métal d'apport pour cette soudure.

Le soudage peut s'effectuer à l'aide d'un procédé par arc électrique avec électrode en tungstène 7 et atmosphère neutre 8 de gaz inerte, ce système de soudage étant connu en soi.

La phase suivante du procédé de soudage selon notre invention consiste à faire glisser longitudinalement la bague fendue 6 sur le tube 2 afin de l'amener au-dessus de la surface externe 9 de la soudure 5a, comme représenté en fig. 5. Dans cette position, la bague fendue 6 se referme par élasticité, son diamètre diminue et cette bague 6 se trouve donc encastrée dans la rainure en creux 9 de l'ensemble des deux pièces 1 et 2 soudées ensemble. Comme représenté en fig. 5, on effectue alors une deuxième opération de soudage comparable à la première, au niveau de cette deuxième bague 6, ce qui a pour effet de créer un second cordon de soudure 6a sur le premier cordon de soudure 5a et qui relie aussi les pièces 1 et 2. On voit ainsi, en fig. 6, les tubes 1 et 2 soudés bout à bout, les cordons de soudure 5a et 6a étant ainsi parfaitement circulaires, continus et très réguliers.

Par ce procédé, on peut ainsi obtenir des tubes soudés bout à bout, exempts de criques, bourrelets ou défournis excessifs. La régularité des soudures ainsi effectuées est très grande. D'autre part, la tête de soudure est dépourvue de système d'amenée du métal d'apport, ce qui élimine le risque d'une amenée irrégulière du métal d'apport. D'autre part, on peut ainsi miniaturiser la tête de soudure, l'utiliser facilement en tête orbitale, et par conséquent souder les pièces dans un encombrement réduit.

Avant de réaliser le premier cordon de soudure 5a, on peut commencer par effectuer tout autour des pièces une série de points de soudure, au nombre de deux, trois ou davantage, afin d'effectuer de façon connue en soi l'agrafage des pièces 1, 2 et 5.

Dans le procédé de soudage propre à notre invention, les bagues 5 et 6 constituent en fait un métal d'apport pour la soudure, leur composition peut être identique à la composition du métal constituant les pièces à souder, ou peut être différente afin de répondre à des problèmes de soudage spécifiques.

Comme il est représenté en fig. 3, les faces planes radiales 3, 4 des pièces à souder 1, 2 ne s'étendent qu'au voisinage de la face interne 10 du tube 1 ou 2, et sont prolongées, à la partie externe du tube 1 ou 2, par des faces coniques 11 et 12 qui vont en s'évasant vers l'extérieur des pièces 1 et 2, de façon à créer un espace entre la zone externe de la bague 5 et les bords externes des tubes 1 et 2.

De cette manière, la première opération de soudage permet une bonne fusion de la bague 5 tout entière.

Le procédé de soudage qui vient d'être décrit est particulièrement bien adapté au soudage de tubes, à l'aide d'une tête de soudage orbitale.

## Revendications

1. Procédé de soudage de deux pièces cylindriques disposées bout à bout, caractérisé par le fait qu'il comprend les opérations successives suivantes:
— disposition des deux pièces à souder (1, 2) mises bout à bout, coaxialement, leurs faces planes radiales (3, 4) en regard, avec insertion entre les deux faces planes en regard d'une première bague (5),
— soudage par l'extérieur, au niveau de la première bague (5) de façon à créer la fusion de cette bague en constituant ainsi un premier cordon de soudure (5a) entre les deux pièces à souder, cette bague (5) faisant office de métal d'apport,
— déplacement longitudinal d'une deuxième bague (6) disposée autour d'une des pièces à souder (1, 2) jusqu'à ce que cette deuxième bague (6) vienne entourer par l'extérieur le premier cordon de soudure (5a),
— soudage par l'extérieur, au niveau de cette deuxième bague de façon à créer sa fusion complète pour obtenir un deuxième cordon de soudure (6a) sur le premier cordon (5a).

2. Procédé de soudage selon la revendication 1, caractérisé par le fait que la deuxième bague (6) est fendue (7) et a des dimensions telles qu'elle peut être enfilée sur l'une (2) des pièces à souder par ouverture de la fente (7) par déformation élastique et que, lorsque cette bague fendue (6) est ensuite disposée autour du premier cordon de soudure (5a), elle se referme élastiquement de façon que la fente redevienne nulle ou minimum, sans jeu radial excessif entre cette bague fendue (6) et le premier cordon de soudure (5a).

3. Procédé de soudage selon l'une des revendications 1 ou 2, caractérisé par le fait que les deux pièces à souder (1, 2) sont des tubes.

4. Procédé de soudage selon la revendication 3, caractérisé par le fait que les deux pièces à souder (1, 2) sont des tubes de diamètres intérieur et extérieur respectivement identiques.

5. Procédé de soudage selon la revendication 4, caractérisé par le fait que les faces planes radiales (3, 4) de ces tubes (1, 2) sont complétées par des faces coniques (11, 12) de façon que la première bague (5) soit pincée de chaque côté par les tubes (1, 2) en une zone située au voisinage de la face interne (10) des tubes, et de façon à créer un espace entre la zone périphérique de cette bague (5) et les bords externes des tubes (1, 2).

6. Procédé de soudage selon l'une quelconque des revendications précédentes, caractérisé par le fait que les opérations de soudage sont réalisées à l'aide d'une tête de soudage orbitale.

## Patentansprüche

1. Verfahren zum Verschweissen zweier zylindrischer, mit ihren Enden aneinanderstossender Werkstücke, gekennzeichnet durch folgende Verfahrensschritte:
— Anordnen der beiden miteinander zu verschweissenden Werkstücke (1, 2) koaxial zueinander unter Einschiebung eines ersten Ringes (5) an ihren planen radialen Stirnflächen (3, 4);
— Schweissen von aussen, auf der Höhe des ersten Rings (5), zum Erhalt einer ersten Schweissnaht (5a) zwischen den beiden miteinander zu verschweissenden Werkstücken durch Schmelzen dieses Ringes, wobei dieser Ring (5) als Auftragsmetall dient;
— Verschieben eines zweiten, um eines der beiden miteinander zu verschweissenden Werkstücke (1, 2), angeordneten Ringes (6) in Längsrichtung, bis dieser zweite Ring (6) sich von aussen um die erste Schweissnaht (5a) legt;
— Schweissen von aussen, in Höhe dieses zweiten Rings, zum Erhalt einer zweiten Schweissnaht (6a) auf der ersten Schweissnaht (5a) durch vollständiges Aufschmelzen des Ringes.

2. Schweissverfahren nach Anspruch 1, dadurch gekennzeichnet, dass der zweite Ring (6) einen Spalt (7) sowie Abmessungen aufweist, durch die dieser sich auf eines (2) der beiden miteinander zu verschweissenden Werkstücke durch Vergrössern des Spalts (7) aufgrund elastischer Verformung aufschieben lässt, sowie dadurch, dass bei anschliessender Anordnung um die erste Schweissnaht (5a) der gespaltene Ring (6) sich schliesst, wobei der Spalt entfällt oder minimal ist.

3. Schweissverfahren nach einem der Ansprüche 1 oder 2, dadurch gekennzeichnet, dass die beiden miteinander zu verschweissenden Werkstücke (1, 2) Zylinder sind.

4. Schweissverfahren nach Anspruch 3, dadurch gekennzeichnet, dass die beiden miteinander zu verschweissenden Werkstücke (1, 2) Zylinder mit identischen Innen- und Aussendurchmessern sind.

5. Schweissverfahren nach Anspruch 4, dadurch gekennzeichnet, dass die planen radialen Stirnflächen (3, 4) der Zylinder (1, 2) zusätzlich mit konusförmig verlaufenden Flächen (11, 12) versehen sind, wobei der erste Ring (5) an beiden Seiten der Zylinder (1, 2) an einer Stelle nahe der Innenwandung (10) der Zylinder durchbohrt ist und zwischen dem Umfangsbereich dieses Rings (5) und den Aussenkanten der Zylinder (1, 2) ein Zwischenraum entsteht.

6. Schweissverfahren nach den vorangehenden Ansprüchen, dadurch gekennzeichnet, dass die Schweissvorgänge mit Hilfe eines Umlaufschweisskopfes erfolgen.

## Claims

1. A method for welding two cylindrical parts which are placed end-to-end, characterised in that it comprises the following successive operations:
   — arrangement of the two parts to be welded (1, 2) which are in end-to-end relation, in coaxial relation, their radial planar surfaces (3, 4) being in confronting relation, with insertion between the two confronting planar surfaces of a first ring (5),
   — welding from the outside, in the region of the first ring (5), so as to produce the melting of this ring and thus constitute a first weld bead (5a) between the two parts to be welded, this ring (5) performing the function of a filler metal,
   — longitudinal displacement of a second ring (6) disposed around one of the parts to be welded (1, 2) until the second ring (6) surrounds the outside of the first weld bead (5a),
   — welding from the outside, in the region of this second ring, so as to cause its complete melting and obtain a second weld bead (6a) on the first bead (5a).

2. A welding method according to Claim 1, characterised in that the second ring (6) is split (7) and has such dimensions that it can be mounted on one (2) of the part to be welded by the opening of the split (7) by elastic deformation and, when this split ring (6) is then disposed around the first weld bead (5a), it closes elastically so that the split becomes nil or minimum without excessive radial clearance between this split ring (6) and the first weld bead (5a).

3. A welding method according to Claim 1 or 2, characterised in that the two parts to be welded (1, 2) are tubes.

4. A welding method according to Claim 3, characterised in that the two parts to be welded (1, 2) are tubes whose inside and outside diameters are respectively identical.

5. A welding method according to Claim 4, characterised in that the radial planar surfaces (3, 4) of these tubes (1, 2) are completed by conical surfaces (11, 12) so that the first ring (5) is pinched on each side by the tubes (1, 2) in a region located in the vicinity of the inner surface (10) of the tubes so as to create a space between the peripheral region of this ring (5) and the outer edges of the tubes (1, 2).

6. A welding method according to any one of the preceding claims, characterised in that the welding operations are carried out with an orbital welding head.

Fig 1

Fig 2

Fig 3

Fig 4

Fig 5

Fig 6